# EUROPEAN PATENT SPECIFICATION

(11) **EP 1 223 834 B1**
(45) Date of publication and mention of the grant of the patent: **28.12.2005**
(21) Application number: 00975099.3
(22) Date of filing: 25.10.2000
(51) Int. Cl.: A47B 96/20

(54) **STRUCTURAL MEMBER FOR FURNITURE**
BAUELEMENT FÜR MÖBEL
ELEMENT STRUCTUREL POUR MEUBLE

(30) Priority: 28.10.1999 SE 9903884
(43) Date of publication of application: 24.07.2002
(73) Proprietor: Airwood Aktiebolag, 685 25 Torsby (SE)
(72) Inventor: SKJETNE, Pal, S-225 92 LUND (SE)
(74) Representative: Johansson, Lars-Erik
(86) International application number: PCT/SE2000/002069
(87) International publication number: WO 2001/030201

(56) References cited:
- AT-B- 271 824
- FR-A- 1 209 202
- FR-A1- 2 270 822
- SE-C- 130 263
- US-A- 2 988 959
- US-A- 3 664 906
- US-A- 4 341 053
- US-A- 5 314 735

## Description

The present invention relates to a structural member for furniture, comprising at least a first and a second board shaped member, which board shaped members are arranged in parallel to each other. In this context the concept of furniture is understood to mean fixtures and movable inventories, such as chairs and sofas, bed furniture, tables, bookcases and other shelves, chests of drawers, cabinets (walls for cabinets as well as doors for cabinets) and doors that are separating rooms from each other.

### PRIOR ART

It is essential in the design of furniture that the structural members of which the furniture is constructed, fulfil certain criteria. Accordingly, such members should fulfil at least the main part of the following criteria:
1. A good strength and resistance, especially bending strength,
2. A low weight,
3. A low cost,
4. Environmentally friendly and recyclable material,
5. Aesthetically pleasing.

It is realised that at least the criteria 1 and 2 are contradictory to each other, especially when combined also with criterion no. 3. Accordingly, of today used structural materials for furniture, e.g. massive wood or other wood based products, such as plywood, masonite, particle board or MDF-board, exhibit a good strength and resistance, but on the other hand a considerable weight and very often a considerable cost. The same is true e.g. for metals, such as stainless steel. On the other hand, polymeric materials (plastics) exhibit a low weight and a low cost, but have flaws in terms of strength, resistance, environmental friendliness and aesthetics. Composite materials, e.g. comprising carbon fibres, may be designed to be very strong and resistant, but are most often too expensive to be used in furniture.

### ACCOUNT OF THE INVENTION

The present invention aims at providing a structural member for furniture, which fulfils essentially all of the criteria according to the above, the structural member according to the invention being strong and resistant, especially exhibiting bending strength, light-weighted, cheap and preferably also environmentally friendly, recyclable and aesthetically pleasing.

This and other objects are achieved by a structural member according to the invention, as defined in claim 1.

The structural member according to the invention is designed as a sandwich element, comprising two relatively thin, board shaped members of e.g. tree or a tree based material, which is beneficial in terms of price and environmental friendliness/recyclability. Preferably, the boards are not made of a transparent material. Spacing members consisting of essentially circular cylindrical, tube shaped members of card- or paperboard are arranged between the board shaped members. These spacing members are arranged such that their symmetry axes are in parallel to each other, and each tube shaped spacing member is arranged such that a first short end thereof is entirely or in essential entirely joined together with a first one of the board shaped members, while a second short end thereof is entirely or in essential entirely joined together with a second one of the board shaped members.

It is for certain known from AT 271824 to design a sandwich element with spacing members consisting of rings erected between two outer boards. However, AT 271824 differs from the present invention in several aspects. Accordingly, the element is not intended for construction of furniture but is intended to give an aesthetically pleasing appearance to a constructional member, e.g. for a wall lining, at least one of the boards being made of a transparent material. Moreover, the rings consist of oval rings of tree which have been joined together from two halves and which are arranged so that the end tree abuts the boards. Furthermore, the rings are only intermittently glued to the boards. Accordingly, the element shown in AT 271824 is not designed to provide resistance and bending strength and would moreover be very expensive, considering that specially designed rings of tree are being used.

Most preferred, the spacing members of the construction according to the invention consist of cylinders of spiral-wound, glued cardboard or paperboard, preferably being manufactured from recycled cardboard or paperboard. The dimensions, i.e. the diameter, wall thickness and height, may vary in dependence of the desired field of use and the desired strength of the product. The thinner the board shaped members, the less the diameter of the spacing members should be. For use in structural members for furniture the spacing members typically have a diameter of 20-150 mm, preferably 30-120 mm and even more preferred 30-100 mm, and a wall thickness of 3-15 mm, preferably 3-10 mm and even more preferred 4-8 mm. The height of the spacing members is considerably larger than the thickness of the board shaped members. Typically, the board shaped members have a thickness of 3-30 %, preferably 5-25 % of the height of the spacing members. The structural member according to the invention may be manufactured at a thickness of from 12 mm and more.

According to one aspect of the invention, the envelope walls of tube shaped spacing members lying next to each other are arranged in abutment or in engagement with each other, and are preferably joined together, suitably by glue. As an alternative, the spacing members may be arranged such that there is a certain distance them between, i.e. not in abutment or in engagement with each other.

According to another aspect of the invention, a frame is arranged between said board shaped members, at least about a major part of their periphery, which frame is joined together with both of the board shaped members, preferably by glue. Suitably, the frame is manufactured from the same material as the board shaped members, preferably from plywood, particle board or homogeneous tree. The frame may be of different dimensions and may be assembled in different ways for different fields of application. Also, similar frame or batten works may be arranged at other locations as desired inside the structural member, between different groups of spacing members. The frame or frames provide(s) stability and will beneficially constitute fitting areas for fitting members such as e.g. legs. Moreover, it constitutes a surface against which optional edge lists may be fastened/glued. According to an alternative however, the frame about the structural member may be omitted, in order to be replaced simply by e.g. edge lists.

Another way of achieving fitting areas for joining of the structural member with other members is to make one or more of the spacing members completely or essentially solid or filled by a solid material, e.g. a tree plug, which constitutes a "host" for screws etc. The solid or filled spacing member may also be provided with one or more internally threaded sleeves or other fitting members, in order to facilitate assembling of the structural member together with other members. In that case, the outermost board shaped member suitably has apertures corresponding to the fitting members in the spacing member.

According to yet another aspect of the invention, a canal or pipe for cable drawing is provided inside the structural member between at least some of the spacing members, there preferably being arranged at least one wall entrance for said cables in one of said board shaped members. A second wall entrance, for the other end of the canal or pipe, may be arranged in the frame or edge list. It is of course also realised that the board shaped member or the frame/edge list may exhibit two or more wall entrances for the canal or the pipe.

According to one embodiment of the invention, the structural member also exhibits a third board shaped member, which is arranged in parallel to said first and second board shaped members. This space too, between the second and the third board shaped members, is filled with circular cylindrical tube shaped spacing members according to the above, or with close-packed strips of corrugated cardboard, which are arranged such that the outermost layers of the corrugated cardboard strips are in the main perpendicular to the second and third board shaped member. Along their longitudinal edges, the corrugated cardboard strips are joined together with the second and third board shaped member, preferably by glue, and they are also glued to each other. This double design of the structural member according to the invention exhibits an extremely good resistance and bending strength, despite a low weight.

The structural member according to the invention is preferably used for board shaped parts in e.g. tables, cabinet doors, doors or shelves and is specifically dimensioned for each field of use or is dimensioned in larger units which are cut to the desired dimensions and are optionally provided with a frame after having been cut up. If desired, the spacing members and/or the space between them may be filled with insulating material, to provide sound- and heat insulation. When insulating material is used, the structural member may even be used for doors for refrigerator or freezer cabinets. Another field of use is pillars or beams, e.g. for table legs. The structural member according to the invention may also be clad, e.g. by veneer, in order to be aesthetically pleasing.

### DESCRIPTION OF THE DRAWINGS

In the following, the invention will be described while referring to the drawings, of which:
- Fig. 1: is showing a structural member according to the invention, viewed in a perspective and before the second of the two board shaped members is put in place,
- Fig. 2: is schematically showing how the spacing members and the frame may be arranged in relation to each other,
- Fig. 3: is schematically showing another way for the spacing members to be arranged in relation to each other,
- Fig. 4: is schematically showing yet another way for the spacing members to be arranged in relation to each other,
- Fig. 5: is showing, as seen from the side and without a frame, a single structural member according to the invention,
- Fig. 6a, b: is showing, as seen from the side and without a frame, two variants of a double structural member according to the invention,
- Fig. 7: is showing, as seen from the side and without a frame, three different ways in which a canal or pipe for cables or the like may be arranged,
- Fig. 8: is showing, as seen in perspective, how a pillar/beam according to the invention may be designed.

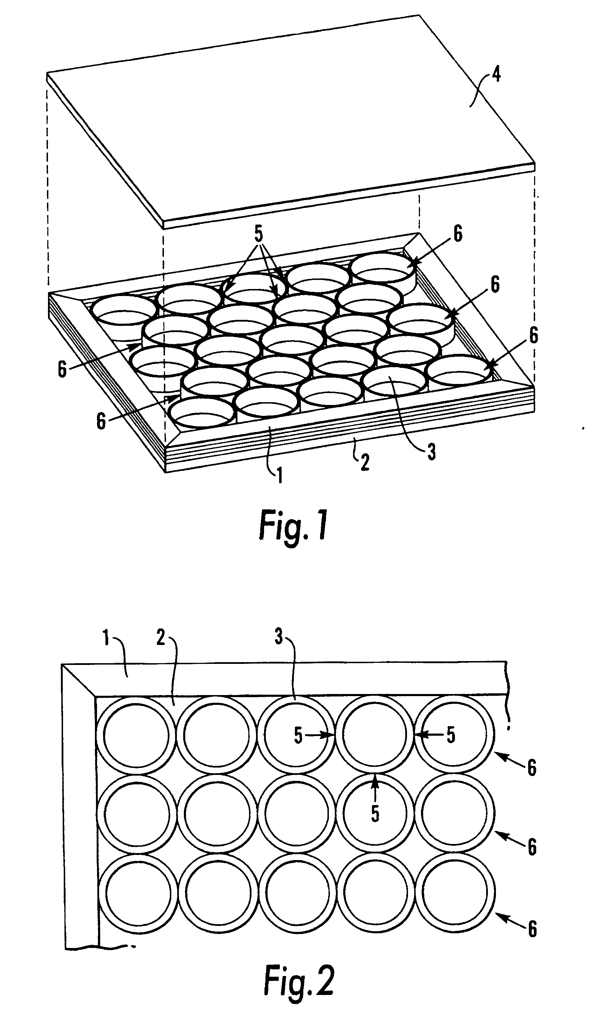

Fig. 1 is principally showing how a structural member according to the invention may be designed. In a frame 1, having a bottom board 2, spacing members 3 are arranged, which consist of rings of cardboard. In the shown case, the frame 1, as well as the bottom 2 and an upper board 4, consist of plywood, whereby the structural member as mounted will have the appearance of a homogeneous plywood board. In comparison with a homogeneous board, the structural member of Fig. 1 however exhibits a greater bending strength, considerably less weight and is cheaper.

The spacing members 3 in Fig. 1 are arranged such that their symmetry axes are parallel to each other and perpendicular to the boards 2 and 4. Moreover, the envelope surfaces of the spacing members 3 abut each other and are preferably joined together, preferably glued to each other in the abutment areas 5, optionally also to the frame 1. All spacing members 3 are of equal height and have preferably been manufactured by cutting up a cardboard cylinder of recycled cardboard, in equal parts. The short ends of the spacing members, i.e. the cut surfaces, abut the lower board 2 as well as the upper board 4 and are completely or essentially completely glued to the same. Preferably, the surfaces of the short ends of the spacing members are 100 % glued to the boards 2, 4. At the assembling of the structural member, the spacing members 3 are first glued to each other in the areas 5, in order to provide a "web" of spacing members. The frame 1 is glued to the lower board 2. The "web" of spacing members 3 is provided with glue on the entire of one of its sides, which side is placed on the bottom board 2 in the frame 1. Thereafter, glue is applied on the entire other side of the "web" and on the upper side of the frame 1, whereafter the upper board is put in place. An alternative way of assembling the structural member is to glue the spacing members 3 one by one on the bottom board 2 and against each other.

In Fig. 1, the spacing members 3 are arranged in relation to each other such that each row 6 of spacing members is displaced in relation to the next row 6 a distance corresponding to half a diameter of the distance members. Thereby, six abutment areas 5 against six spacing members lying next to it, will be achieved for a spacing member which is completely surrounded by other spacing members. This type of arrangement will in the following be denoted A.

In Fig. 2, the spacing members 3 are arranged in relation to each other such that the spacing members of each row 6 of spacing members are centred in relation to the spacing members 3 in the row 6 of spacing members lying next to it. Thereby, four abutment areas 5 against four spacing members lying next to it, will be achieved for a spacing member which is completely surrounded by other spacing members. This type of arrangement will in the following be denoted B.

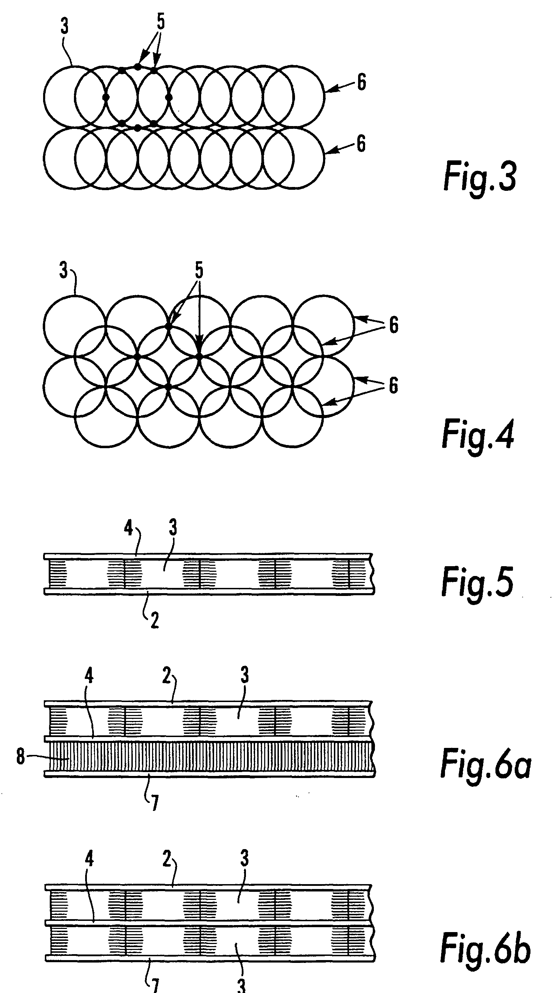

In Fig. 3, another embodiment is schematically shown, where the spacing members 3 are arranged in relation to each other such that the spacing members in each row are in engagement with each other. In this case there is provided four recesses in the envelope walls of each spacing member, having a depth which corresponds to half the height of the spacing members, so that spacing members in the same row, lying next to each other, may be joined together in the recesses. Thereby, every second spacing member 3 is turned with its recesses facing up and every second with its recesses facing down, so that they may be inserted into each other. Hereby, eight abutment areas 5 (indicated with dots in Fig. 3) against six spacing members lying next to it, will be achieved for a spacing member which is completely surrounded by other spacing members. Suitably, the spacing members 3 are glued to each other in all abutment areas 5. In principle, the total number of spacing members 3 will be the double as compared to the number of spacing members in Fig. 1 or 2, whereby the resistance and bending strength of the structural member is additionally enhanced. This type of arrangement will in the following be denoted C.

In Fig. 4, there is schematically shown yet an embodiment in which the spacing members 3 are provided with recesses according to the same principle as in Fig. 3. In this case however, also the spacing members in rows 6 lying next to each other are in engagement with each other. Hereby, four abutment areas 5 (indicated with dots) against eight spacing members lying next to it, will be achieved for a spacing member which is completely surrounded by other spacing members. In principle, the total number of spacing members 3 will be the double as compared to the number of spacing members in Fig. 1 or 2, whereby the resistance and bending strength of the structural member is additionally enhanced. This type of arrangement will in the following be denoted D.

In Fig. 5, there is shown a single structural member according to the invention, i.e. having two boards 2, 4 and one row of spacing members 3, as seen from the side and without a frame. In Fig. 6a and b, there is shown a double structural member according to the invention, i.e. having three boards 2, 4, 7 and two rows of spacing members 3, 8, as seen from the side and without a frame. In Fig. 6a, the second layer of spacing members 8 consists of close-packed strips of corrugated cardboard, which are arranged so that the outermost layers in the strips of corrugated cardboard are in the main perpendicular to the boards 4 and 7. The strips of corrugated board joined by gluing along their long side edges with the boards 4 and 7. In the following an arrangement/layer of corrugated cardboard will be denoted E. The two layers of spacing members 3, 8 in the double structural member may according to the invention be realised in a number of different combinations, each layer 3, 8 being realised according to any of the arrangements A-E. However, at least one of the layers of spacing members is constituted by circular cylindrical tube shaped members. In Fig. 6b there is shown a variant of a double structural member where both layers of spacing members 3, 3 consists of circular cylindrical tube shaped members and where each one of these layers is realised according to any of the arrangements A-D.

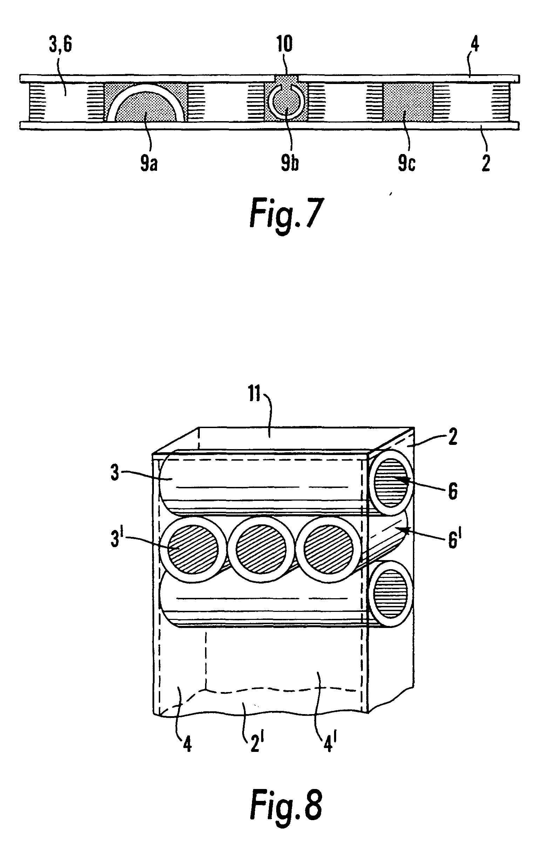

In Fig. 7 there is shown three different variants of how to arrange a canal or a pipe 9a-c for cables or the like, between two, next to each other lying, rows 6 of spacing member 3. The pipe or canal may e.g. consist of a tube shaped pipe 9b, which optionally may be longitudinally cut 9a. The tube shaped pipe may consist of cardboard, paperboard, plastics or metal (steel). Also it might quite simply consist of a void 9c between two, next to each other lying, rows 6 of spacing member 3. In this way, cables and electrical flexible cords may very beneficially be drawn inside the structural member, with wall entrances 10 being arranged in the boards 2, 4 and/or the frame/edge list 1 (not shown in this figure).

In Fig. 8 there is principally shown how a pillar, a leg or a beam may be designed according to the invention. The spacing members 3, 3' are arranged such that their symmetry axes in rows 6, 6' lying next to each other are turned 90° in relation to each other, in a plane which is perpendicular to the longitudinal extension of the leg. The embodiment shown consists of a rectangular leg having two pairs 2, 4 and 2',4', respectively, of opposed board shaped members. Here, the spacing members 3 have, in every second row 6, a length which is greater than their diameter. In the rows 6' lying next to them and abutting them, the spacing members are instead short, but in a larger number (or just one but with a greater diameter). In its short end, the leg has been provided with a lid 11.

A pillar, beam or a leg having a quadratic cross-section may be realised in a corresponding way, having identical spacing members 3, 3'in every row 6, 6'. Of course, a pillar, beam or leg, either having a rectangular or a quadratic cross-section, may be designed with spacing members having parallel symmetry axes in the same way as in the previously described boards. Hereby, a structural member having bending strength properties resembling the ones of a glulam, may be achieved.

### EXAMPLE

As an example of the beneficial decrease in weight, at a retained or enhanced bending strength, which may be achieved by a structural member according to the invention, the weights of a board for a table, 180 cm × 80 cm × 2.5 cm, is shown for different materials:

| | |
|---|---|
| MDF-board | 30 kg |
| Particle board | 25 kg |
| Plywood | 25 kg |
| Glulam/massive wood | 21 kg |
| Board according to the invention | 9 kg |

In the example, the board according to the invention is designed with two board shaped members and a frame of plywood, having spacing members made of cardboard cylinders, abutting each other. Moreover, the board according to the invention will have such a good bending strength that there will not be needed any borders around the underside of the table, whereby additional weight and costs may be saved.

The invention is not limited by the above described embodiments but may be varied within the scope of the claims. It is e.g. realised that structural members may be designed with more than two layers of spacing members.

## Claims

1. A structural member for furniture, comprising at least a first (2) and a second (4) board shaped member, which board shaped members are arranged in parallel to each other, **characterised in that** said board shaped members (2, 4) are manufactured from tree or a tree based material, and **in that** spacing members (3) are arranged in-between these board shaped members (2, 4), which spacing members consist of essentially circular cylindrical, tube shaped members of cardboard or paperboard, which are arranged such that their symmetry axes are parallel to each other, every tube shaped spacing member (3) being arranged such that a first short end thereof is essentially completely joined together with said first board shaped member (2), while a second short end thereof is essentially completely joined together with said second board shaped member (4).

2. A structural member according to claim 1, **characterised in that** the envelope walls of tube shaped spacing members (3) lying next to each other are arranged in abutment or in engagement with each other, and are preferably joined together, preferably by glue.

3. A structural member according to claim 1, **characterised in that** the envelope walls of tube shaped spacing members (3) lying next to each other are arranged such that there is a small distance them between.

4. A structural member according to any of the above claims, **characterised in that** a frame (1) of plywood, particle board or homogeneous tree is arranged in-between said board shaped members (2, 4), which frame is joined together with both the board shaped members (2, 4), preferably by glue, and which frame constitutes a fitting area for joining of the structural member with other members.

5. A structural member according to any of the above claims, **characterised in that** there is arranged a batten in-between said board shaped members (2, 4), which batten is joined together with both the board shaped members (2, 4), preferably by glue.

6. A structural member according to any of the above claims, **characterised in that** the is arranged a frame (1) or an edge list in-between said board shaped members (2, 4), about at least a main part of their periphery, which frame or edge list is joined together with both the board shaped members (2, 4), preferably by glue.

7. A structural member according to any of the above claims, **characterised in that** said tube shaped spacing members (3) have a diameter of 20-150 mm, preferably 30-120 mm and even more preferred 30-100 mm, a wall thickness of 3-15 mm, preferably 3-10 mm and even more preferred 4-8 mm, and **in that** they are manufactured from spiral-wound cardboard or paperboard.

8. A structural member according to any of the above claims, **characterised in that** said structural member consists of a board or a pillar/beam.

9. A structural member according to any of the above claims, **characterised in that** said structural member also comprises a third board shaped member (7), which is arranged in parallel with said first (2) and second (4) board shaped members, it being arranged, in-between said second board shaped member (4) and said third board shaped member (7), spacing members (3) consisting of essentially circular cylindrical, tube shaped members, which are arranged such that their symmetry axes are parallel to each other, every tube shaped spacing member (3) being arranged such that a first short end thereof is essentially completely joined together with said second board shaped member (4), while a second short end thereof is essentially completely joined together with said third board shaped member (7).

10. A structural member according to any of claims 1-8, **characterised in that** said structural member also comprises a third board shaped member (7), which is arranged in parallel with said first (2) and second (4) board shaped members, it being arranged, in-between said second board shaped member (4) and said third board shaped member (7), close-packed strips (8) of corrugated cardboard, arranged such that the outermost layers in the strips of corrugated cardboard are essentially perpendicular to said second (4) and third (7) board shaped members, which strips of corrugated cardboard are joined together with said second and third board shaped members.

11. A structural member according to any of the above claims, **characterised in that** a canal or a pipe (9a, 9b, 9c) is arranged in-between at least a part of the spacing members (3), for drawing of cables inside the structural member, at least one wall entrance (10) preferably being arranged for said cables, in one of said board shaped members.

12. A structural member according to any of the above claims, **characterised in that** it is completely or essentially filled with an insulation material, inside and between said spacing members (3).

13. A structural member according to any of the above claims, **characterised in that** it also exhibits at least one spacing member which is completely or essentially filled with a solid material, in order to constitute a fitting area for joining of said structural member with other members.

14. A structural member according to claim 1, **characterised in that** it also exhibits spacing members (3') which are arranged such that the symmetry axes of spacing members (3, 3') lying next to each other, as seen in a longitudinal extension of the structural member, are turned 90° in relation to each other, in a plane which is perpendicular to the longitudinal extension of the structural member, whereby the structural member forms a pillar, a beam or a leg.

## Patentansprüche

1. Strukturelement für Möbel, umfassend mindestens ein erstes (2) und ein zweites (4) plattenförmiges Element, wobei die plattenförmigen Elemente parallel zueinander angeordnet sind, **dadurch gekennzeichnet, dass** die plattenförmigen Elemente (2, 4) aus Holz oder einem auf Holz basierenden Material hergestellt sind, und **dadurch**, dass Abstandselemente (3) zwischen diesen plattenförmigen Elementen (2, 4) angeordnet sind, wobei die Abstandselemente aus im Wesentlichen kreiszylindrischen, röhrenförmigen Elementen aus Karton oder Pappe bestehen, die derart angeordnet sind, dass ihre Symmetrieachsen parallel zueinander sind, wobei jedes röhrenförmige Abstandselement (3) derart angeordnet ist, dass ein erstes kurzes Ende davon im Wesentlichen vollständig mit dem ersten plattenförmigen Element (2) verbunden ist, während ein zweites kurzes Ende davon im Wesentlichen vollständig mit dem zweiten plattenförmigen Element (4) verbunden ist.

2. Strukturelement gemäß Anspruch 1, **dadurch gekennzeichnet, dass** die Hüllwände von röhrenförmigen Abstandselementen (3), die nebeneinander liegen, angrenzend oder ineinander eingreifend angeordnet sind und vorzugsweise miteinander verbunden sind, vorzugsweise durch Klebstoff.

3. Strukturelement gemäß Anspruch 1, **dadurch gekennzeichnet, dass** die Hüllwände von röhrenförmigen Abstandselementen (3), die nebeneinander liegen, derart angeordnet sind, dass es dazwischen einen kleinen Abstand gibt.

4. Strukturelement gemäß irgendeinem der vorhergehenden Ansprüche, **dadurch gekennzeichnet, dass** ein Rahmen (1) aus Sperrholz, Pressspan oder homogenem Holz zwischen den plattenförmigen Elementen (2, 4) angeordnet ist, wobei der Rahmen mit beiden plattenförmigen Elementen (2, 4) verbunden ist, vorzugsweise durch Klebstoff, und wobei der Rahmen einen Passbereich zum Verbinden des Strukturelements mit anderen Elementen bildet.

5. Strukturelement gemäß irgendeinem der vorhergehenden Ansprüche, **dadurch gekennzeichnet, dass** eine Latte zwischen den plattenförmigen Elementen (2, 4) angeordnet ist, wobei die Latte mit beiden plattenförmigen Elementen (2, 4) verbunden ist, vorzugsweise durch Klebstoff.

6. Strukturelement gemäß irgendeinem der vorhergehenden Ansprüche, **dadurch gekennzeichnet, dass** ein Rahmen (1) oder einen Randbalken über zumindest einen Großteil von deren Rand zwischen den plattenförmigen Elementen (2, 4) angeordnet ist, wobei der Rahmen oder der Randbalken mit beiden plattenförmigen Elementen (2, 4) verbunden ist, vorzugsweise durch Klebstoff.

7. Strukturelement gemäß irgendeinem der vorhergehenden Ansprüche, **dadurch gekennzeichnet, dass** die röhrenförmigen Abstandselemente (3) einen Durchmesser von 20-150 mm aufweisen, vorzugsweise 30-120 mm und noch mehr bevorzugt 30-100 mm, eine Wandstärke von 3-15 mm, vorzugsweise 3-10 mm und noch mehr bevorzugt 4-8 mm und dass sie aus einem sprialgewickelten Karton oder Pappe hergestellt sind.

8. Strukturelement gemäß irgendeinem der vorhergehenden Ansprüche, **dadurch gekennzeichnet, dass** das Strukturelement aus einer Platte oder einem Pfeiler/Träger besteht.

9. Strukturelement gemäß irgendeinem der vorhergehenden Ansprüche, **dadurch gekennzeichnet, dass** das Strukturelement auch ein drittes plattenförmiges Element (7) umfasst, welches parallel zu dem ersten (2) und zweiten (4) plattenförmigen Element angeordnet ist, wobei zwischen dem zweiten plattenförmigen Element (4) und dem dritten plattenförmigen Element (7) Abstandselemente (3) angeordnet sind, die aus im Wesentlichen kreiszylindrischen, röhrenförmigen Elementen bestehen, die derart angeordnet sind, dass ihre Symmetrieachsen parallel zueinander sind, wobei jedes röhrenförmige Abstandselement (3) derart angeordnet ist, dass ein erstes kurzes Ende davon im Wesentlichen vollständig mit dem zweiten plattenförmigen Element (4) verbunden ist, während ein zweites kurzes Ende davon im Wesentlichen vollständig mit dem dritten plattenförmigen Element (7) verbunden ist.

10. Strukturelement gemäß irgendeinem der Ansprüche 1-8, **dadurch gekennzeichnet, dass** das Strukturelement auch ein drittes plattenförmiges Element (7) umfasst, welches parallel zu dem ersten (2) und zweiten (4) plattenförmigem Element angeordnet ist, wobei zwischen dem zweiten plattenförmigen Element (4) und dem dritten plattenförmigen Element (7) dicht gepackte Streifen (8) aus gewelltem Karton angeordnet sind, wobei sie derart angeordnet sind, dass die äußersten Schichten in den Streifen aus gewelltem Karton im Wesentlichen senkrecht zu dem zweiten (4) und dritten (7) plattenförmigen Element angeordnet sind, wobei die Streifen aus gewelltem Karton mit dem zweiten und dritten plattenförmigen Element verbunden sind.

11. Strukturelement gemäß irgendeinem der vorhergehenden Ansprüche, **dadurch gekennzeichnet, dass** ein Kanal oder ein Rohr (9a, 9b, 9c) zwischen mindestens einem Teil der Abstandselemente (3) angeordnet ist, um Kabel in das Strukturelement zu ziehen, wobei mindestens ein Wandeingang (10) vorzugsweise für die Kabel in einem der plattenförmigen Elemente angeordnet ist.

12. Strukturelement gemäß irgendeinem der vorhergehenden Ansprüche, **dadurch gekennzeichnet, dass** es vollständig oder im Wesentlichem mit einem Isolierungsmaterial innerhalb der und zwischen den Abstandselementen (3) gefiillt ist.

13. Strukturelement gemäß irgendeinem der vorhergehenden Ansprüche, **dadurch gekennzeichnet, dass** es mindestens ein Abstandselement aufweist, welches vollständig oder im Wesentlichen mit einem festen Material gefüllt ist, um einen Passbereich zum Verbinden des Strukturelements mit anderen Elementen zu bilden.

14. Strukturelement gemäß Anspruch 1, **dadurch gekennzeichnet, dass** es auch Abstandselement (3') aufweist, die derart angeordnet sind, dass die Symmetrieachsen von Abstandselementen (3, 3'), die nebeneinander liegen, wie in einer Längsausdehnung des Strukturelements zu sehen, um 90° zueinander gedreht sind, in einer Ebene, welche senkrecht zur Längsausdehnung des Strukturelements ist, wobei das Strukturelement einen Pfeiler, einen Träger oder einen Fuß bildet.

## Revendications

1. Élément structurel pour meuble, comprenant au moins un premier (2) et un second (4) éléments en forme de panneau, lesquels éléments en forme de panneau sont disposés parallèlement l'un à l'autre, **caractérisé en ce que** lesdits éléments en forme de panneau (2, 4) sont fabriqués à partir d'arbres ou de matériau à base d'arbres, et **en ce que** des éléments d'espacement (3) sont disposés entre ces éléments en forme de panneau (2, 4), lesquels éléments d'espacement consistent en des éléments en forme de tube substantiellement cylindrique et circulaire, en carton ou en papier cartonné, et sont disposés de telle sorte que leurs axes de symétrie soient parallèles les uns aux autres, tous les éléments d'espacement (3) en forme de tube étant disposés de telle sorte que des premières extrémités de ces tubes sont substantiellement complètement reliées audit premier élément (2) en forme de panneau tandis que les deuxièmes extrémités de ces tubes sont substantiellement complètement reliées audit deuxième élément (4) en forme de panneau.

2. Elément structurel selon la revendication 1, **caractérisé en ce que** les parois d'enveloppe des éléments d'espacement (3) en forme de tube adjacents sont placées de manière à venir en butée ou en engagement les unes avec les autres, et sont de préférence reliées les unes aux autres, de préférence par de la colle.

3. Elément structurel selon la revendication 1, **caractérisé en ce que** les parois d'enveloppe des éléments d'espacement (3) en forme de tube adjacents sont placées de manière à ce qu'il existe une petite distance entre elles.

4. Élément structurel selon l'une quelconque des revendications précédentes, **caractérisé en ce qu'**un cadre de contreplaqué ou de particules de bois agglomérées ou homogénéisées est disposé entre lesdits éléments (2, 4) en forme de panneau, lequel cadre est assemblé aux deux éléments (2, 4) en forme de panneau, de préférence au moyen de colle, et lequel cadre constitue une zone de fixation pour l'assemblage de l'élément structurel avec d'autres éléments.

5. Élément structurel selon l'une quelconque des revendications précédentes, **caractérisé en ce qu'**une latte est disposée entre lesdits éléments (2, 4) en forme de panneau, laquelle latte est assemblée aux deux éléments (2, 4) en forme de panneau, de préférence au moyen de colle.

6. Élément structurel selon l'une quelconque des revendications précédentes, **caractérisé en ce qu'**un cadre ou un élément de bordure est disposé entre lesdits éléments (2, 4) en forme de panneau, sur environ au moins une partie principale de la périphérie de ceux-ci, lequel cadre ou élément de bordure est assemblé aux deux éléments (2, 4) en forme de panneau, de préférence au moyen de colle.

7. Élément structurel selon l'une quelconque des revendications précédentes, **caractérisé en ce que** lesdits éléments d'espacement (3) en forme de tube ont un diamètre de 20 à 150 mm, de préférence de 30 à 120 mm, et de manière encore préférée de 30 à 100 mm, une épaisseur de paroi de 3 à 15 mm, de préférence de 3 à 10 mm, et de manière encore préférée de 4 à 8 mm, et **en ce qu'**ils sont fabriqués à partir de carton ou de papier cartonné enroulé en spirale.

8. Élément structurel selon l'une quelconque des revendications précédentes, **caractérisé en ce que** ledit élément structurel consiste en train panneau ou en un ensemble pilier/poutre.

9. Élément structurel selon l'une quelconque des revendications précédentes, **caractérisé en ce que** ledit élément structurel comprend également un troisième élément (7) en forme de panneau, qui est disposé parallèlement auxdits premier (2) et second (4) éléments en forme de panneau, des éléments d'espacement (3) étant disposés entre ledit second élément (4) en forme de panneau et ledit troisième élément (7) en forme de panneau, et étant constitués d'éléments en forme de tube substantiellement circulaires et cylindriques, ces éléments d'espacement (3) étant disposés de telle sorte que leurs axes de symétrie soient parallèles les uns aux autres, tous les éléments d'espacement (3) en forme de tube étant disposés de telle sorte que des premières extrémités de ces éléments sont substantiellement complètement reliées audit second élément (4) en forme de panneau tandis que des secondes extrémités de ces éléments d'espacement sont substantiellement complètement reliées audit troisième élément (7) en forme de panneau.

10. Élément structurel selon l'une quelconque des revendications 1 à 8, **caractérisé en ce que** ledit élément structurel comprend également un troisième élément (7) en forme de panneau, qui est disposé parallèlement auxdits premier (2) et second (4) éléments en forme de panneau, des bandes (8) rapprochées et en paquet, de carton ondulé, étant disposées entre ledit second élément (4) en forme de panneau et ledit troisième élément (7) en forme de panneau et étant disposées de telle sorte que les couches les plus à l'extérieure de ces bandes de carton ondulé sont substantiellement perpendiculaires auxdits deuxième (4) et troisième (7) éléments en forme de panneau, lesquelles bandes de carton ondulé sont assemblées auxdits deuxième et troisième éléments en forme de panneau.

11. Élément structurel selon l'une quelconque des revendications précédentes, **caractérisé en ce qu'**un canal ou un conduit (9a, 9b, 9c) est aménagé entre au moins une partie des éléments d'espacement (3), pour le passage de câbles à l'intérieur de l'élément structurel, au moins une entrée de paroi (10) étant de préférence aménagée pour lesdits câbles dans l'un desdits éléments en forme de panneau.

12. Élément structurel selon l'une quelconque des revendications précédentes, **caractérisé en ce qu'**il est complètement ou substantiellement rempli d'un matériau isolant, à l'intérieur des éléments d'espacement (3) et entre ceux-ci.

13. Élément structurel selon l'une quelconque des revendications précédentes, **caractérisé en ce qu'**il comprend également au moins un élément d'espacement qui est complètement ou substantiellement rempli par un matériau solide, afin de constituer une zone de fixation pour assembler ledit élément structurel avec d'autres éléments.

14. Élément structurel selon la revendication 1, **caractérisé en ce qu'**il comprend également des éléments d'espacement (3') qui sont disposés de telle sorte que les axes de symétrie d'éléments d'espacement (3, 3') adjacents, considérés selon la direction longitudinale de l'élément structurel, sont situés à 90 degrés les uns par rapport aux autres dans un plan qui est perpendiculaire à la direction longitudinale de l'élément structurel, de sorte que l'élément structurel forme un pilier, une poutre ou un jambage.
